# EUROPEAN PATENT SPECIFICATION

(11) **EP 1 010 714 B1**
(45) Date of publication and mention of the grant of the patent: **12.04.2006**
(21) Application number: 99309115.6
(22) Date of filing: 16.11.1999
(51) Int. Cl.: C08G 77/12, C08J 3/28

(54) **Method for making functionalized siloxanes, compositions containing such siloxanes and articles made therefrom**
Verfahren zur Herstellung funktioneller Gruppen enthaltender Siloxane, diese enthaltende Zusammensetzungen und daraus hergestellte Artikel
Procédé de préparation de siloxanes fonctionnalisés, compositions les contenant et produits obtenus à base ces dernières

(30) Priority: 15.12.1998 US 211744
(43) Date of publication of application: 21.06.2000
(73) Proprietor: GENERAL ELECTRIC COMPANY, Schenectady, NY 12345 (US)
(72) Inventor: Kulpa, Theodore A., Castleton, New York 12033 (US); Eckberg, Richard Paul, Saratoga Springs, New York 12866 (US); Shepherd, Brian Dale, Lino Lakes, Minnesota 55014 (US)
(74) Representative: Szary, Anne Catherine

(56) References cited:
- EP-A- 0 389 138
- US-A- 4 279 717
- US-A- 4 855 381

## Description

The present invention relates to the preparation of polyorganosiloxane polymers, more particularly to the preparation of branched silylhydride functional polyorganosiloxane polymers.

U.S. Patent No. 4,855,381 discloses a method for preparing organopolysiloxanes by reacting an alkyl orthosilicate with an oligomeric organopolysiloxane having at least one monofunctional siloxane unit substituted with a hydrogen atom or a monovalent hydrocarbon radical in the presence of a sulfonic acid-containing compound or a phosphonitrile compound.

In a first aspect, the present invention is directed to a method for making a branched silylhydride-functional organopolysiloxane polymer, comprising contacting, in the presence of water and of a catalyst selected from sulfonic acid-containing compounds and phosphonitrile compounds:
(i) a first silicon-containing compound, comprising at least one quadrifunctional silicon atom per molecule;
(ii) a second silicon-containing compound, comprising at least one of monofunctional silicon atom per molecule; and
(iii) a third silicon-containing compound, comprising at least one trifunctional silicon atom per molecule;
wherein at least one of the second silicon-containing compound and the third silicon-containing compound further comprises a hydrogen atom covalently bonded to the respective monofunctional silicon atom or trifunctional silicone atom of the compound.

In a second aspect, the present invention is directed to a method for making an branched epoxy-functional organopolysiloxane polymer, comprising:
(1) forming a branched silylhydride-functional organopolysiloxane polymer by the method disclosed immediately above; and
(2) reacting the branched silylhydride-functional organopolysiloxane polymer with an epoxy-functional compound containing at least one unsaturated site per molecule to form the branched epoxy-functional organopolysiloxane polymer.

In a third aspect, the present invention is directed to a radiation curable epoxysilicone composition that contains a branched epoxy-functional organopolysiloxane polymer made by the method described immediately above and an effective amount of a photocatalyst.

In a further aspect, the present invention is directed to a laminate, comprising a substrate and a cured layer of the above-disclosed radiation curable epoxysilicone composition supported on the substrate.

As referred to herein, the functionality of a silicon atom corresponds to the number of oxygen atoms covalently bonded to the silicon atom, that is, a "monofunctional" silicon atom is one having one oxygen atom covalently bonded to it via a single Si-O bond, a "difunctional" silicon atom is one having two oxygen atoms, each covalently bonded to it via a respective single Si-O bond, a "trifunctional" silicon atom is one having three oxygen atoms each covalently bonded to it via a respective single Si-O bond, and a "quadrifunctional" silicon atom is one having four oxygen atoms each covalently bonded to it via a respective single Si-O bond.

Preferably, a monofunctional silicon atom also has three monovalent substituent groups, each covalently bonded to it via a respective single Si-C or Si-H bond, a difunctional silicon containing atom also has two monovalent substituent groups each covalently bonded to it via a respective single Si-C or Si-H bond, and a trifunctional silicon containing moiety also has a monovalent substituent group covalently bonded to it via a respective single Si-C or Si-H bond. Suitable monovalent substituent groups include H and monovalent organic substituent groups, such as, for example, monovalent hydrocarbon radicals.

Compounds suitable as the first silicon-containing compound of the present invention include compounds, such as, for example, organosilicates, polyorganosiloxane oligomers and polyorganosiloxane polymers, having "Q" structural units, that is structural units of the formula (I):

SiO_{4/2} (I)

In a preferred embodiment, the first silicon-containing compound comprises one or more of organosilicates of the structural formula (II):

R¹₄Si (II)

wherein each R¹ is independently alkoxy, preferably (C₁-C₈)alkoxy, more preferably (C₂-C₆)alkoxy, most preferably ethoxy, and partial hydrolyzates of such organosilicates.

Suitable orthosilicate compounds include, for example, one or more of tetramethyl orthosilicate, tetraethyl orthosilicate, poly(ethyl orthosilicate), tetrapropyl orthosilicate, and poly(propyl orthosilicate), as well as the partial hydrolysis products of any of the above.

In a highly preferred embodiment, the first silicon-containing compound comprises partially hydrolyzed ethyl orthosilicate.

Compounds suitable as the second silicon-containing compound of the present invention include compounds, such as, for example, polyorganosiloxane oligomers and polyorganosiloxane polymers, having "M" structural units, that is structural units of the formula (III):

R²₃SiO_{1/2} (III)

wherein each R² is independently H or a monovalent hydrocarbon radical.

In a preferred embodiment, the second silicon-containing compound comprises one or more organosiloxane oligomers, each of which includes, per molecule, 2 or more, preferably from 2 to 8, more preferably from 2 to 4 and most preferably 2, monofunctional organosiloxane units of the structural formula (III) wherein R² is H or a monovalent hydrocarbon radical.

As used herein, the terminology "monovalent hydrocarbon radicals" includes monovalent acyclic hydrocarbon radicals, monovalent alicyclic hydrocarbon radicals and monovalent aromatic hydrocarbon radicals.

As used herein, the terminology "acyclic hydrocarbon radical" means a straight chain or branched hydrocarbon radical, preferably containing from 2 to 20 carbon atoms per radical, which may be saturated or unsaturated and which may be optionally substituted or interrupted with one or more heteroatoms or functional groups, such as, carboxyl, cyano, hydroxy, halo, mercapto, oxy. Suitable monovalent acyclic hydrocarbon radicals include, for example, alkyl, alkenyl, alkynyl, alkoxyalkyl, hydroxyalkyl, cyanoalkyl, carboxyalkyl, haloalkyl, such as, for example, methyl, ethyl, sec-butyl, tert-butyl, octyl, decyl, dodecyl, cetyl, stearyl, ethenyl, propenyl, butynyl, hydroxypropyl, cyanoethyl, carboxymethyl, chloromethyl and 3,3,3-fluoropropyl.

As used herein, the terminology "alicyclic hydrocarbon radical" means a radical containing one or more saturated hydrocarbon rings, preferably containing from 4 to 10 carbon atoms per ring, per radical which may optionally be substituted on one or more of the rings with one or more alkyl or alkylene groups, each preferably containing from 2 to 6 carbon atoms per group, or other functional groups and which, in the case of two or more rings, may be fused rings. Suitable monovalent alicyclic hydrocarbon radicals include, for example, cyclohexyl and cyclooctyl.

As used herein, the terminology "aromatic hydrocarbon radical" means a hydrocarbon radical containing one or more aromatic rings per radical, which may optionally be substituted on the one or more aromatic rings with one or more alkyl or alkylene groups, each preferably containing from 2 to 6 carbon atoms per group, or other functional groups and which, in the case of two or more rings, may be fused rings. Suitable monovalent aromatic hydrocarbon radicals include, for example, phenyl, tolyl, 2,4,6-trimethylphenyl, l, 2-isopropylmethylphenyl, 1-pentalenyl, naphthyl, anthryl, phenylethyl, and 2-(1-naphthyl)ethyl.

In a preferred embodiment, each R² is independently alkyl, preferably (C₁₋C₆)alkyl, or H.

In a highly preferred embodiment the second silicon-containing compound comprises one or more compounds, such as, for example, polyorganosiloxane oligomers and polyorganosiloxane polymers, having "M^{H}" structural units, that is structural units of the formula (IV):

HR^{2'}₂SiO_{1/2} (IV)

wherein each R^{2'} is independently a monovalent hydrocarbon radical.

Suitable organosiloxane oligomers include, for example, hexamethyldisiloxane, hexaethyldisiloxane, octamethyltrisiloxane, octamethylcyclotetrasiloxane, tetramethyldisiloxane, pentamethyldisiloxane, heptamethyltrisiloxane, divinyltetramethyldisiloxane.

In a preferred embodiment, the second silicon-containing compound comprises 1,1,3,3-tetramethyldisiloxane, more preferably a mixture of 1,1,3,3-tetramethyldisiloxane and hexamethyldisiloxane.

Compounds suitable for use as the third silicon-containing compound include compounds, such as, for example, silanes, polyorganosiloxane oligomers and polyorganosiloxane polymers, that include "T" structural units, that is, structural units of the formula (V):

R³SiO_{3/2} (V)

wherein R³ is H or a monovalent hydrocarbon radical.

In a preferred embodiment, the third silicon-containing compound comprises one or more silanes of the structural formula (VI):

R⁴SiR⁵₃ (VI)

wherein R⁴ is H or a monovalent hydrocarbon radical; and each R⁵ is independently hydroxy or alkoxy.

In a preferred embodiment, R⁴ is alkyl, preferably (C₁-C₆)alkyl, or H. In a more highly preferred embodiment, R⁴ is (C₁-C₆)alkyl.

In a preferred embodiment, R⁵ is alkoxy, preferably (C₁-C₈)alkoxy, more preferably (C₂-C₆)alkoxy, most preferably ethoxy.

Suitable silanes include, for example, methyltrimethoxysilane, methyltriethoxysilane, ethyltrimethoxysilane, and ethyltriethoxysilane.

The first, second and third silicon containing compounds each may be distinct compounds or, alternatively, one or more of the monofunctional, trifunctional and quadrifunctional silicon atoms may be contained in a single molecule. Furthermore, difunctional silicon moieties, that is "D" units of the structural formula (VII):

R⁶₂SiO_{2/2} (VII)

wherein each R⁶ is independently H or a monovalent hydrocarbon radical, may optionally be included in any of the first, second and third silicon containing compounds. For example, the first and second silicon-containing compounds may be the same compound, such as, for example, an MQ polyorganosiloxane oligomer, or the second and third silicon-containing compounds may be the same compound, such as, for example, an MT or an MDT polyorganosiloxane oligomer.

In a highly preferred embodiment, the third silicon-containing compound comprises methyltrimethoxysilane or methyltriethoxysilane.

Suitable sulfonic acid-containing compounds include, for example, sulfuric acid, sufurous acid, fuming sulfuric acid, p-toluene sulfonic acid, acid clay trifluoromethane sulfonic acid, sodium hydrogen sulfide, sulfonic acid group-containing solid acid catalysts, such as for example, NAFION™ resins available from E. I du Pont de Nemours & Co. and AMBERLYST™ resins, available from the Rohm and Haas Company. Suitable phosphonitrile compounds include, for example, linear phosphonitrile chloride.

In a preferred embodiment, the catalyst comprises a sulfonic acid-containing compounds selected from p-toluene sulfonic acid, and trifluoromethane sulfonic acid.

In a preferred embodiment, the reactants and catalyst are contacted in a mixture of water and one or more organic liquids. Suitable organic liquids include, for example, alkanes, such as for example hexane, isodecane, dodecane; aromatic solvents, such as for example, toluene; alcohols such as, for example, methanol, ethanol, isopropanol; ketones, such as for example, acetone, methyl ethyl ketone, methyl isobutyl ketone; and halogenated solvents, such as, for example, methylene chloride. In a preferred embodiment, the reaction is carried out in a mixture of water and one or more alkanes.

In a preferred embodiment, the reaction mixture contains at least the stoichiometric amount of water required to hydrolyze the SiOH and SiOC bonds of the various silicon-containing reactant compounds in the reaction mixture and, more preferably, contains an amount of water in excess of the stoichiometric amount required to hydrolyze such bonds.

In a preferred embodiment, the reaction is conducted at a temperature in the range of from 0°C to 100°C, more preferably from 10°C to 70°C.

In a preferred embodiment, the reaction is carried out in the presence of from 0.1 parts by weight ("pbw") to 2.0 pbw catalyst per 100 pbw of the total amount of silicon-containing compounds.

The molar ratios of M, D, T and Q units in the branched polyorganosiloxane correspond to that in the reactant mixture and the relative amounts of organosilicate, organpolysiloxane oligomer and organsilicon compound are selected to provide the desired molar ratio of M, D, T and Q units in the branched polyorganosiloxane product. In a preferred embodiment, the molar ratio of the combined amount of M units and M^{H} units to the combined amount of Q units and T units ("(M+M^{H}):(Q+T)") is from 0.5:1.0 to 2.0:1.0, more preferably from 0.8:1.0 to 1.5:1.0; the molar ratio of T units to Q units ("Q:T") is from 0.1:1.0 to 2.0:1.0 more preferably from 0.8:1.0 to 1.2:1.0. and the molar ratio of M^{H} units to M units ("M^{H}:M") is from 0.05:1.0 to 1.0:0, more preferably from 0.1:1.0 to 0.5:1.0.

In a preferred embodiment, the branched epoxy-functional organopolysiloxane polymer of the present invention is made according to a process analogous to that set forth in coassigned U.S. Patent No. 5,360,833, that is, by hydrosilylation of the silylhydride-functional organopolysiloxane of the present invention with the unsaturated epoxy-functional compound, conducted in the presence of a hydrosilylation catalyst, preferably a rhodium hydrosilylation catalyst, such as for example, RhCl₃(Bu₂S)₃. In a highly preferred embodiment, the branched silylhydride functional siloxane polymer is diluted with a reactive diluent, such as for example, a linear silylhydride-functional siloxane polymer.

In a preferred embodiment, the epoxy-functional compound is selected from allyl glycidyl ether, limonene monoxide, dicyclopentadiene monoxide and 4-vinylcyclohexeneoxide. Most preferably, the epoxy-functional compound is 4-vinylcyclohexeneoxide.

In a preferred embodiment, the radiation curable epoxysilicone composition of the present invention comprises a branched epoxy-functional organopolysiloxane polymer made according to the method of the present invention and an amount of a photocatalyst effective to allow the composition to be cured by exposure to radiation.

Photocatalysts suitable for use as the photocatalyst of the radiation curable epoxysilicone composition of the present invention are generically known. Preferably, the photocatalyst comprises one or more iodonium salts that are compatible with the other components of the radiation curable epoxysilicone composition, such as, for example, the diaryliodonium salts disclosed in U.S. 4,279,717, the disclosure of which is hereby incorporated herein by reference. In a highly preferred embodiment, the photocatalyst component of the radiation curable epoxysilicone composition of the present invention comprises one or more of the bis(4-dodecylphenyl)iodonium salts of BPF₆⁻, SbF₆⁻ or B(C₆F₅)₄⁻. In a highly preferred embodiment, the radiation curable epoxysilicone composition comprises, based on the total weight of the radiation curable epoxysilicone composition, from about 200 parts per million to about 2 percent by weight of one or more of the preferred bis(dodecylphenyl)iodonium salts.

The radiation curable epoxy-silicone coating composition of the present invention is useful as, for example, a paper coating, particularly as a release coating for a controlled release liner for adhesive products, such as, for example, adhesive labels.

A laminate according to the present invention may be made by applying a layer of the radiation curable epoxysilicone composition of the present invention to the substrate and curing the layer by exposure to radiation to form a cured coating layer supported on the substrate. The laminate is useful as a controlled release liner for adhesive products. In a preferred embodiment, the laminate further comprises a second substrate and a layer of an adhesive composition supported on the second substrate, wherein the layer of adhesive is in contact with the a cured layer of the radiation curable epoxysilicone composition, wherein the first substrate and cured coating layer of the laminate function as a release liner for the second substrate and adhesive layer of the laminate. Suitable substrates, such as, for example, paper substrates, and suitable adhesive compositions, such as for example, adhesive compositions based on acrylic polymers, as well as suitable methods for making and using such laminates are well known in the art.

### Example 1

Water (431 grams (g)) was added to a mixture of tetramethyldisiloxane (80 g), hexamethyldisiloxane (390g), methyltrimethoxysilane (545g), partially hydrolyzed ethyl orthosilicate (600 g, ES 40, Ashland Chemical Co.), mixed alkanes (159 g, boiling point range 120-140°C. Isopar G, Exxon) and p-toluene sulfonic acid (20 g) over 50 minutes. The mixture was heated at reflux (76°C) for two hours, cooled and allowed to separate into two phases. The organic phase was then heated to a pot temperature of 95°C, followed by vacuum stripping at 95°C and 220 torr to isolate a fluid product having a viscosity of 47 cStk and 1201 parts per million ("ppm") hydride.

### Examples 2-4 and Comparative Example C1

The composition of Example 2 was made as follows. The following materials were charged to a 2 liter resin flask: tetramethyl disiloxane (33.5 g, 0.25 mole), hexamethyldisiloxane (162 g ,1.0 mole), methyltrimethoxysilane, (340 g, 2.5 mole), partially hydrolyzed ethyl orthosilicate, (360 g, 2.5 mole). Paratoluene sulfonic acid (10 g) was charged to the agitating mixture of silanes along with of mixed alkanes (80 g, boiling point range 120-140°C, Isopar G, Exxon). Water (228 g, 12.7 mole) was then slowly added to the silane mixture over a 40 minute period as the exothermic hydrolysis raised the reaction mixture temperature from 24°C to 57°C. The reaction mixture was then refluxed at 70-80°C for 2 hours, then transferred to a separatory funnel and allowed to set for several hours. The mixture separated into two phases; the lower organic phase was retained, recharged to a 1 liter flask equipped with a Dean-Stark Flask and then refluxed up to 105°C as water and ethanol and other light ends were removed from the azeotrope via the trap. The product was a mobile solution of M^{H}MTQ polymer in alkanes that contained 74.2% polymer solids and exhibited a 30.9 cStk viscosity. Analysis of this solution indicated that 796 ppm hydrogen (as SiH) were present, which, adjusted for the solids content, indicated that the polymer itself included ~ 1070 ppm H (as M^{H}). Based on the relative amounts of the silane and siloxane reactants, the target polymer formula was M^{H}M₄T₅Q₅, theoretical H content of 975 ppm H. ²⁹Si analysis of the polymer solution indicated that the composition of the polymer corresponded to the stoichiometry M^{H}M_{4.6}T_{5.5}Q_{5.5}.

The composition of Example 3 was made by charging the following materials to a 2 liter resin flask in the same fashion as the Example 2 above: tetramethyldisiloxane (33.5 g, 0.25 mole); hexamethyldisiloxane (141.8 g, 0.875 mole), methyltrimethoxysilane (340 g,2.5 mole), partially hydrolyzed ethyl orthosilicate (360 g, 2.5 mole), p-toluene sulfonic acid, (10 g) and mixed alkanes (80 g, boiling point range 120-140°C, Isopar G solvent, Exxon). Addition of 228 g water, hydrolysis and workup as described above, provided a 79.4% solution of polymer in the solvent. The viscosity of the product was 626 cStk, and the H content and Si-NMR analyses confirmed that the target stoichiometry of M^{H}M_{3.5}T₅Q₅ was achieved.

The composition of Example 4 corresponding to the formula M^{H}M₃T₅Q₅ was produced in the same fashion as described above. The final product was a 71.5% polymer solids solution of 157 cStk viscosity.

The composition of Comparative Example C1 was made as follows. The following materials were charged to 2 liter resin flask as above: dimethylchlorosilane (46.7 g, 0.5 mole), trimethylethoxysilane (236 g, 2.0 mole), methyltrimethoxysilane (340 g ,2.5 mole), tetraethoxysilane (360 g, 2.5 mole), mixed alkanes (80 g, boiling point range 120-140°C, Isopar G solvent, Exxon). Water (228 g , 12.7 mole) was then added to the agitating silane mixture over an 80 minute period as the reaction temperature exothermed from 20°C to 60°C. The reaction mixture was then refluxed at 80°C for 2 hours, then transferred to a separatory funnel for several hours and permitted to separate into two layers. The lower organic phase was retained and worked up as described above, yielding a 73% solids solution of a 65 cStk viscosity polymer solution which had but 390 ppm H present, and which ²⁹Si NMR analysis indicated had a stoichiometry of M^{H}_{0.5}M_{4.4}D_{0.2}T_{5.3}Q_{5.5}. Cleavage of SiH groups from M units results in formation of D units, which was apparently the case here.

### Examples 5-7 and Comparative Example 2

The composition of Example 5 was made as follows. 75 g of the composition of Example 2 (55.7 g, as polymer solids), were blended with a M^{H}D₂₅M^{H} silicone fluid bearing 1040 ppm H as SiH (50 g). This mixture contained about 53% branched polymer solids and 47% linear polymer solids. 14.5 g of 4-vinylcyclohexeneoxide (VCHO) were added dropwise to this blend at 90°C in the presence of 2 ppm Rh as RhCl₃(Bu₂S)₃ catalyst. The progress of the reaction was monitored by infrared ("IR") spectroscopy and when the IR evidence showed that all SiH had been reacted with the VCHO, the reaction mix was stripped of solvent, excess VCHO and other light ends in vacuo at 165°C to yield a 234 cStk viscosity fluid, Epoxy Equivalent Weight = 1030.

The composition of Example 6 was made as follows. 59 g of the composition of Example 3 were mixed with a M^{H}D₂₅M^{H} silicone fluid bearing 1040 ppm H as SiH (50 g). This mix contained 48% branched polymer solids and 52% linear siloxane solids. Hydrosilation with 16.2 g of VCHO as described above provided a 1153 cStk viscosity epoxy-functional silicone polymer/fluid mixture as product, Epoxy Equivalent Weight = 1292.

The composition of Example 7 was made as follows. 69.9 g of the composition of Example 4 were mixed with a M^{H}D₂₅M^{H} silicone fluid bearing 1040 ppm H as SiH (50 g). This mixture contained 50% branched siloxane polymer solids and 50% linear siloxane polymer solids. Reaction of this mixture with VCHO in fashion analogous to the composition of Example 6 yielded a very viscous fluid product (>50000 cStk), Epoxy Equivalent Weight 1440. The viscous polymer product (80 pbw) was combined with the divinyl ether of 1,4-cyclohexanedimethanol (20 pbw) to provide a composition having a viscosity of 2000 cStk.

The composition of Comparative Example 2 was made as follows. 68.5 g of the composition of Comparative Example C1 were combined with a M^{H}D₂₅M^{H} silicone fluid bearing 1040 ppm H as SiH (50 g), a 50/50 mixture of branched siloxane polymer solids and linear siloxane polymer solids, then reacted with sufficient VCHO to convert all SiH groups to Si-epoxy. Workup of the product provided a 110 cStk mixture of epoxysilicone polymer and epoxysilicone fluid, with an Epoxy Equivalent Weight of 2120. It should be noted that loss of SiH in the composition of Comparative Example C1 led to much higher Epoxy Equivalent Weight in the final CRA product than in the cases of the other products prepared from p-toluene sulfonic acid-catalysed polymer inputs.

### Examples 8-10 and Comparative Example C3

100 parts of each of the epoxy-functionalized products of Examples 5-7 and Comparative Example 2 were mixed with 2 parts of a photocatalyst solution (solution of 50 pbw bis(4-dodecylphenyl)iodonium hexafluoro-antimonate and 2 pbw isopropylthiozanthone in 48 pbw of an alkyl glycidal ether) then manually applied to a polykraft substrate as a thin film, at a coatweight of about 1.2 g, and passed through an RPC Lab UV Processor and exposed to UV light from 2 banks of Hanovia medium pressure mercury vapor sources to cure the coatings to a smear-free and migration-free surface. We found that all of the coatings cured to crosslinked surfaces which adhered strongly to Scotch™ 610 cellophane tape (3M), good evidence of controlled release effect. The combination of minimum total lamp power and maximum Processor conveyer speed required to provide for good qualitative cure was then assessed, with the results as set forth below in TABLE I as Lamp Power, expressed in Watts per inch (Watts/in) and Line Speed, expressed in feet per minute (ft/min):

**TABLE I**

| | Ex 8 | Ex 9 | Ex 10 | C Ex C3 |
|---|---|---|---|---|
| Epoxy-silicone polymer | Ex 5 | Ex 6 | Ex 7 | C Ex C2 |
| Lamp Power (Watts/inch) | 200 | 300 | 200 | 600 |
| Line Speed (ft/min) | 400 | 400 | 500 | 300 |

It is clear that the reduced amount of reactive epoxy in the composition of Comparative Example C2, due to SiH cleavage in the composition of Comparative Example C1, has led to a much slower UV cure in the composition of Comparative Example C3 than in the compositions of Examples 8, 9 and 10.

### Examples 11-13 and Comparative Examples C4 and C5

The compositions of Examples 11-13 and Comparative Examples C4 and C5 were made by combining two or more of the following components: one of the branched epoxy-functional silicone polymers of Examples 5-7 and Comparative Example C2, a linear epoxy-silicone polymer (UV9315, GE Silicones) and an iodonium photocatalyst (commercially available as grade UV9380C, GE Silicones) in the relative amounts set forth below in Table II, to make coating baths.

**TABLE II**

| | C Ex C4 | C Ex C5 | Ex 11 | Ex 12 | Ex 13 |
|---|---|---|---|---|---|
| C Ex C 2 | - | 50 | -- | -- | -- |
| Ex 5 | - | - | 50 | - | - |
| Ex 6 | - | - | -- | 50 | -- |
| Ex 7 | - | -- | -- | - | 50 |
| UV9315 | 100 | 50 | 50 | 50 | 50 |
| UV9380C | 2 | 2 | 2 | 2 | 2 |

The compositions of Examples 11-13 and Comparative Examples C4 and 5 was manually coated on Otis UV350™ SCK release liner substrate with a doctor blade to an average coat weight of 1.2 grams per square meter, then cured by exposure to 600 watts/in total UV power from two mercury vapor lamps mounted in an RPC lab UV Processor (described above), at a conveyer speed of 200 fpm, to form a release liner. The coated and cured release liner samples were then laminated with 8 inch strips of TESA™ 7475 acrylic adhesive tape. Half of these laminates were aged for 24 hours at ambient (25°C) temperature, the other half were aged in an oven at elevated temperature (70°C) for 24 hours. After allowing the oven aged laminates to cool to room temperature for an hour, the force required to delaminate the release liners from the adhesive tape at a 180° angle and 0.05 meters per second pull speed was recorded using a ZPE1000 release tester (Instrumentors, Inc). Results are set forth below in TABLE III, as release values, after aging at 25°C or at 75°C, expressed in grams per inch (g/in), and the difference in release value as a result of elevated temperature aging, expressed as a percentage (%), calculated as 100 x (release following aging at 75°C/ release following aging at 25°C)

**TABLE III**

| | C Ex C4 | C Ex C5 | Ex 11 | Ex 12 | Ex 13 |
|---|---|---|---|---|---|
| Release, 25°C aged (g/in) | 22 | 55 | 50 | 44 | 91 |
| Release, 75°C aged (g/in) | 61 | 118 | 87 | 86 | 181 |
| Δ _{75°C/25°C} (%) | 177 | 115 | 74 | 95 | 99 |

The laminates based on the release liners prepared using the compositions of Examples 11-13 and Comparative Example C5 all provide useful controlled release differentials, giving at least a doubling of release force compared to that exhibited by the laminates based on the release liner prepared using the composition of Comparative Example C4.

The release stability (as indicated by the increase in release as a functional of oven aging of the laminates) of the laminates based on the release liners prepared using the compositions of Examples 11-13 is superior to that exhibited by the laminates based on the release liners prepared using the respective compositions of Comparative Examples C4 , as well as those laminates based on the release liners prepared using the respective compositions of Comparative Examples C5. The improved stability appears to be the result of higher reactivity of the coatings of Examples 11-13, as compared to that of the coating composition of Comparative Example C5. This is believed to be the result of increased epoxy content of the epoxy silicon polymer compositions of Examples 5-7, as compared to that of the epoxy polymer of Comparative Example C2, which in turn results from better retention of silylhydride functional groups during the syntheses of the silicon polymer compositions of Examples 2-4, as compared to Comparative Example C1. Increased epoxy content provides for faster and more complete cure as well as improved miscibility of iodonium photocatalyst.

The present method provides improved control of the amount of SiH groups on the branched silylhydride-functional siloxane polymer, and, therefore, a means of improved control of the amount of epoxy-functionality of the branched epoxy-functional organopolysiloxane polymer of the present invention. The improved control over the epoxy-functionality of the branched epoxy-functional organopolysiloxane polymer provides improved performance properties, such as, for example, improved cure speed, as exhibited by the radiation curable epoxysilicone composition of the present invention.

In comparison, a conventional reverse hydrolysis route, that is, one using halosilane reactants, to an analogous silylhydride functional polymer generates acid during hydrolysis of the halosilane reactants, which, in turn, catalyzes cleavage of the SiH bonds. The amount of acid-catalysed Si-H cleavage is difficult to predict or control, which leads to variation in the silylhydride content of such polymers and to variation in the epoxy content of branched epoxy-functional organopolysiloxane polymer made therefrom.

The method of the present invention permits the use of siloxane reactants in place of halosilanes, to thereby avoid the undesired acid-catalysed SiH cleavage side reaction that would be experienced in a reverse hydrolysis route.

## Claims

1. A method for making a branched silylhydride-functional organopolysiloxane, comprising contacting, in the presence of water and of a catalyst selected from sulfonic acid-containing compounds and phosphonitrile compounds:
(i) a first silicon-containing compound, comprising at least one quadrifunctional silicon atom per molecule;
(ii) a second silicon-containing compound, comprising at least one monofunctional silicon atom per molecule;
(iii) a third silicon-containing compound, comprising at least one trifunctional silicon atom per molecule,
wherein at least one of the second silicon-containing compound and the third silicon-containing compound further comprises a hydrogen atom covalently bonded to the respective monofunctional silicon atom or trifunctional silicone atom of the compound.

2. The method of claim 1, wherein the first silicon-containing compound comprises one or more of organosilicates of the formula R¹₄Si, wherein each R¹ is independently alkoxy, and partial hydrolyzates thereof.

3. The method of claim 1, wherein the second silicon containing compound comprises one or more structural units of the formula R²₃SiO_{1/2}, wherein each R² is independently H or a monovalent hydrocarbon radical.

4. The method of claim 1, wherein the third silicon containing compound comprises one or more structural units of the formula R³SiO_{3/2}, wherein R³ is H or a monovalent hydrocarbon radical.

5. The method of claim 1, wherein partially hydrolyzed ethyl orthosilicate, tetramethyldisiloxane and methyltrimethoxysilane are contacted in an aqueous medium in the presence of p-toluene sulfonic acid to form the branched silylhydride-functional organopolysiloxane.

6. A branched silylhydride-functional organopolysiloxane made by the method of any preceding claim, wherein the branched silylhydride-functional organopolysiloxane comprises: one or more Q structural units of the formula SiO_{4/2}, one or more M^{H} structural units of the formula HR^{2'}₂SiO_{1/2.} wherein each R^{2'} is independently a monovalent hydrocarbon radical, one or more T structural units of the formula R³SiO_{3/2}, wherein R³ is monovalent hydrocarbon radical, and, optionally, one or more M structural units of the formula R²₃SiO_{1/2}, wherein each R² is independently a monovalent hydrocarbon radical, wherein the molar ratio of the combined amount of M units and M^{H} units to the combined amount of Q units and T units is from 0.5:1.0 to 2.0:1.0, the molar ratio of T units to Q units is from 0.1:1.0 to 5.0:1.0 and the molar ratio of M^{H} units to M units is from 0.05:1.0 to 1.0:0.

7. A method for making a branched epoxy-functional organopolysiloxane polymer, comprising reacting the branched silylhydride-functional organopolysiloxane polymer of claim 6 with an epoxy-functional compound containing at least one unsaturated site per molecule to form the branched epoxy-functional organopolysiloxane polymer.

8. A radiation curable epoxysilicone composition comprising the branched epoxy-functional organopolysiloxane polymer obtainable by the method of claim 7 and an effective amount of a photocatalyst.

9. A laminate, comprising a substrate and a cured layer of the radiation curable epoxysilicone composition of claim 8 supported on the substrate.

## Patentansprüche

1. Verfahren zur Herstellung eines verzweigten Silylhydrid funktionellen Organopolysiloxans, bei welchem man in Gegenwart von Wasser und eines Katalysators ausgewählt aus Sulfonsäure enthaltenden Verbindungen und Phosphomitrilverbindungen in Berührung bringt:
(i) eine erste Silizium enthaltende Verbindung, umfassend wenigstens ein vierfach funktionelles Siliziumatom pro Molekül;
(ii) eine zweite Silizium enthaltende Verbindung umfassend wenigstens ein monofunktionelles Siliziumatom pro Molekül;
(iii) eine dritte Silizium enthaltende Verbindung, umfassend wenigstens ein trifunktionelles Siliziumatom pro Molekül,
wobei wenigstens eine von der zweiten Silizium enthaltenden Verbindung und der dritten Silizium enthaltenden Verbindung weiterhin ein Wasserstoffatom umfassen, das covalent an das entsprechende monofunktionelle Siliziumatom oder trifunktionelles Siliziumatom der Verbindung gebunden ist.

2. Verfahren nach Anspruch 1, **dadurch gekennzeichnet, dass** die erste Silizium enthaltende Verbindung ein oder mehrere Organosilikate der Formel R¹₄Si umfasst, wobei jedes R¹ unabhängig Alkoxy ist, und partielle Hydrolysate davon.

3. Verfahren nach Anspruch 1, **dadurch gekennzeichnet, dass** die zweite Silizium enthaltende Verbindung ein oder mehrere Struktureinheiten der Formel R²₃SiO_{1/2} umfasst, worin jedes R² unabhängig H oder ein monovalenter Kohlenwasserstoffrest ist.

4. Verfahren nach Anspruch 1, **dadurch gekennzeichnet, dass** die dritte Silizium enthaltende Verbindung ein oder mehrere Struktureinheiten der Formel R³SiO_{3/2} umfasst, worin R³ H oder ein monovalenter Kohlenwasserstoffrest ist.

5. Verfahren nach Anspruch 1, **dadurch gekennzeichnet, dass** partiell hydrolysiertes Ethylorthosilikat, Tetramethyldisiloxan und Methyltrimethoxysilan in einem wässrigen Medium in Gegenwart von p-Toluolsulfonsäure zur Bildung des verzweigten Silylhydrid funktionellen Organopolysiloxans in Berührung gebracht werden.

6. Ein verzweigtes Silylhydrid funktionelles Organopolysiloxan hergestellt nach dem Verfahren nach einem der vorhergehenden Ansprüche, wobei das verzweigte Silylhydrid funktionelle Organopolysiloxan aufweist: eine oder mehrere Struktureinheiten Q der Formel SiO_{4/2}, eine oder mehrere Struktureinheiten M^{H} der Formel HR^{2'}₂SiO_{1/2}, wobei jedes R^{2'} unabhängig ein monovalenter Kohlenwasserstoffrest ist, ein oder mehrere Struktureinheiten T der Formel R³SiO_{3/2}, worin R³ ein monovalenter Kohlenwasserstoffrest ist, und, gegebenenfalls, ein oder mehrere Struktureinheiten M der Formel R²₃SiO_{1/2,} worin jedes R² unabhängig ein monovalenter Kohlenwasserstoffrest ist, wobei das molare Verhältnis der kombinierten Menge der M Einheiten und M^{H} Einheiten zur kombinierten Menge von Q Einheiten und T Einheiten zwischen 0,5:1,0 bis 2,0:1,0 ist, das molare Verhältnis von T Einheiten zu Q Einheiten zwischen 0,1:1,0 bis 5,0:1,0 und das molare Verhältnis von M^{H} Einheiten zu M Einheiten zwischen 0,05:1,0 bis 1;0:0 ist.

7. Verfahren zur Herstellung eines verzweigten Epoxy funktionellen Organopolysiloxanpolymers, bei welchem man das verzweigte Silylhydrid funktionelle Organopolysiloxanpolymer aus Anspruch 6 mit einer Epoxy funktionellen Verbindung umsetzt, die wenigstens eine ungesättigte Stelle pro Molekül enthält zur Bildung des verzweigten Epoxy funktionellen Organopolysiloxanpolymers.

8. Eine strahlungshärtbare Epoxysilikonzusammensetzung aufweisend das verzweigte Epoxy funktionelle Organopolysilioxanpolymer erhältlich nach einem Verfahren nach Anspruch 7 und eine wirksame Menge eines Photokatalysators.

9. Ein Laminat aufweisend ein Substrat und eine gehärtete Schicht der strahlungshärtbaren Epoxysilikonzusammensetzung nach Anspruch 8 geträgert auf dem Substrat.

## Revendications

1. Procédé pour la préparation d'un organopolysiloxane ramifié à fonction hydrure de silyle, comprenant la mise en contact, en présence d'eau et d'un catalyseur choisi parmi des composés contenant de l'acide sulfonique et des composés de type phosphonitrile :
(i) d'un premier composé silicié, comprenant au moins un atome de silicium tétrafonctionnel par molécule ;
(ii) d'un deuxième composé silicié, comprenant au moins un atome de silicium monofonctionnel par molécule ;
(iii) d'un troisième composé silicié, comprenant au moins un atome de silicium trifonctionnel par molécule,
dans lequel au moins l'un du deuxième composé silicié et du troisième composé silicié comprend en outre un atome d'hydrogène lié par covalence à l'atome de silicium monofonctionnel respectif ou à l'atome de silicium trifonctionnel du composé.

2. Procédé selon la revendication 1, dans lequel le premier composé silicié comprend un ou plusieurs organosilicates de formule R¹₄Si, dans laquelle chaque radical R¹ est indépendamment un groupe alcoxy, et des hydrolysats partiels de ceux-ci.

3. Procédé selon la revendication 1, dans lequel le deuxième composé silicié comprend une ou plusieurs unités structurales de formule R²₃SiO_{1/2}, dans laquelle chaque radical R² est indépendamment H ou un radical hydrocarboné monovalent.

4. Procédé selon la revendication 1, dans lequel le troisième composé silicié comprend une ou plusieurs unités structurales de formule R³SiO_{3/2}, dans laquelle R³ est H ou un radical hydrocarboné monovalent.

5. Procédé selon la revendication 1, dans lequel un orthosilicate d'éthyle partiellement hydrolysé, du tétraméthyldisiloxane et du méthyltriméthoxysilane sont mise en contact dans un milieu aqueux, en présence d'acide p-toluènesulfonique, pour former l'organopolysiloxane ramifié à fonction hydrure de silyle.

6. Organopolysiloxane ramifié à fonction hydrure de silyle, préparé par le procédé selon l'une quelconque des revendications précédentes, dans lequel l'organopolysiloxane ramifié à fonction hydrure de silyle comprend : une ou plusieurs unités structurales Q de formule SiO_{4/2}, une ou plusieurs unités structurales M^{H} de formule HR^{2'}₂SiO_{1/2}, dans laquelle chaque radical R²' est indépendamment un radical hydrocarboné monovalent, une ou plusieurs unités structurales T de formule R³SiO_{3/2}, dans laquelle R³ est un radical hydrocarboné monovalent, et éventuellement une ou plusieurs unités structurales M de formule R²₃SiO_{1/2}, dans laquelle chaque radical R² est indépendamment un radical hydrocarboné monovalent, le rapport molaire de la quantité combinée des unités M et des unités M^{H} à la quantité combinée des unités Q et des unités T valant de 0,5:1,0 à 2,0:1,0, le rapport molaire des unités T aux unités Q valant de 0,1:1,0 à 5,0:1,0 et le rapport molaire des unités M^{H} aux unités M valant de 0,05:1,0 à 1,0:0.

7. Procédé pour la préparation d'un polymère organopolysiloxane ramifié à fonction époxy, comprenant la mise en réaction du polymère organopolysiloxane ramifié à fonction hydrure de silyle de la revendication 6 avec un composé à fonction époxy, comportant au moins un site insaturé par molécule, pour la formation du polymère organopolysiloxane ramifié à fonction époxy.

8. Composition d'époxysilicone durcissable par irradiation, comprenant le polymère organopolysiloxane ramifié à fonction époxy pouvant être obtenu par le procédé de la revendication 7 et une quantité efficace d'un photocatalyseur.

9. Stratifié comprenant un support et une couche durcie de la composition d'époxysilicone durcissable par irradiation de la revendication 8, fixée sur le support.
